# EUROPEAN PATENT SPECIFICATION

(11) **EP 2 246 770 B1**
(45) Date of publication and mention of the grant of the patent: **05.12.2012**
(21) Application number: 10173211.3
(22) Date of filing: 24.03.1999
(51) Int. Cl.: G06F 3/01, G06F 3/033

(54) **Force feedback control knobs**
Kraftrückgekoppelte Steuerungsknöpfe
Boutons de commande à retour d'effort

(30) Priority: 26.03.1998 US 49155; 26.10.1998 US 179382
(43) Date of publication of application: 03.11.2010
(62) Divisional of application: 99914135.1
(73) Proprietor: Immersion Corporation, San Jose, CA 95134 (US)
(72) Inventor: Rosenberg, Louis, San Jose CA 95132 (US); Schena, Bruce, Menlo Park CA 94025 (US)
(74) Representative: Phillips & Leigh

(56) References cited:
- EP-A2- 0 789 321
- EP-A2- 0 794 089
- WO-A-97/25657
- WO-A2-97/21160
- DE-A1- 19 528 457
- DE-A1- 19 630 810

## Description

### BACKGROUND OF THE INVENTION

The present invention relates generally to interface devices for allowing humans to interface with electronic and computer devices, and more particularly to mechanical computer interface devices that allow the user to provide input to electronic systems and provide force feedback to the user.

Electronic and computer devices are used in a wide variety of applications. For many devices, a user desires to provide input to a device using a simple, intuitive mechanical control. Control wheels and knobs provide such an intuitive input device for many applications.

In one application, control wheels and knobs are useful to provide input to computer systems. For example, users can interact with a visual environment displayed by a computer on a display device to perform functions on the computer, play a game, experience a simulation or "virtual reality" environment, use a computer aided design (CAD) system, browse the World Wide Web, or otherwise influence events or images depicted on the screen. One visual environment that is particularly common is a graphical user interface (GUI). GUI's present visual images which describe various graphical metaphors of a program or operating system implemented on the computer. Common GUI's include the Windows® operating system from Microsoft Corporation, the MacOS® operating system from Apple Computer, Inc., and the X- Windows GUI for Unix operating systems. The user typically moves a user-controlled graphical object, such as a cursor or pointer, across a computer screen and onto other displayed graphical objects or screen regions, and then inputs a command to execute a given selection or operation. Other programs or environments also may provide user-controlled graphical objects such as a cursor and include browsers and other programs displaying graphical "web pages" or other environments offered on the World Wide Web of the Internet, CAD programs, video games, virtual reality simulations, etc.

A common interface device for providing user input to a GUI is a mouse or trackball. A mouse is moved by a user in a planar workspace to move a graphical object such as a cursor on the 2-dimensional display screen in a direct mapping between the position of the user manipulandum and the position of the cursor. This is typically known as "position control", where the motion of the graphical object directly correlates to motion of the user manipulandum.
One drawback to traditional mice is that functions such as scrolling a document in a window and zooming a view displayed on the screen in or out are typically awkward to perform, since the user must use the cursor to drag a displayed scroll bar or click on displayed zoom controls.

These types of functions are often more easily performed by "rate control" devices, i.e. devices that have an indirect or abstract mapping of the user manipulandum to the graphical object, such as pressure-sensitive devices. Scrolling text in a window or zooming to a larger view in a window are better performed as rate control tasks, since the scrolling and zooming are not directly related to the planar position of a mouse. Similarly, the controlled velocity of a simulated vehicle is suitable for a rate control paradigm.

To allow the user easier control of scrolling, zooming, and other like functions when using a mouse, a "scroll wheel" or "mouse wheel" has been developed and has become quite common on computer mice. A mouse wheel is a small finger wheel provided on a convenient place on the mouse, such as between two mouse buttons, which the user may rotate to control a scrolling or zooming function. Most commonly, a portion of the wheel protrudes out of the top surface of the mouse which the user can move his or her finger over. The wheel typically includes a rubber or other frictional surface to allow a user's finger to easily rotate the wheel. In addition, some mice provide a "clicking" wheel that moves between evenly-spaced physical detent positions and provides discrete positions to which the wheel can be moved as well as providing the user with some physical feedback as to how far the wheel has rotated. The wheel is most commonly used to scroll a document in a text window without having to use a scroll bar, or to zoom a window's display in or out without selecting a separate zoom control. The wheel may also be used in other applications, such as a game, drawing program, or simulation.

One problem with existing mouse wheels is that they are quite limited in functionality. The wheel has a single frictional feel to it, and provides the user with very little tactile feedback as to the characteristics of the scrolling or zooming function employed. Even the mouse wheels having physical detents are limited in that the detents are spaced a constant distance apart and have a fixed tactile response, regardless of the scrolling or zooming task being performed or the characteristics of the document or view being manipulated. Providing additional physical information concerning the characteristics of the task that the wheel is performing, as well as allowing the wheel to perform a variety of other tasks in a GUI or other environment, would be quite useful to a user.

In other applications, control wheels and knobs are also quite useful. Often, rotary control knobs offer a degree of control to a user that is not matched in other forms of control devices, such as button or switch controls. For example, many users prefer to use a rotating control knob to adjust the volume of audio output from a stereo or other sound output device, since the knob allows both fine and coarse adjustment of volume with relative ease, especially compared to button controls. Both rotary and linear (slider) knobs are used on a variety of other types of devices, such as kitchen and other home appliances, video editing/playback devices, remote controls, televisions, etc.

Some control knobs have been provided with "force feedback." Force feedback devices can provide physical sensations to the user manipulating the knob. Typically, a motor is coupled to the knob and is connected to a controller such as a microprocessor. The microprocessor receives sensor signals from the knob and sends appropriate force feedback control signals to the motor so that the motor provides forces on the knob. In this manner, a variety of programmable feel sensations can be output on the knob, such as detents, spring forces, or the like.

One problem occurring in control knobs of the prior art is that the knobs are limited to basic rotary motion. This limits the control options of the user to a simple, one-degree-of- freedom device that does not allow a variety of selection options. In addition, if force feedback is provided on the knob, the limited force feedback and control functionality of the knob limits the user from fully taking advantage of the force feedback to provide more control over desired functions.

Patent document EP0794089 describes a function control system for the auxiliary equipment of a motor vehicle. The controller is capable of linear, rotational and tilting movements and provides for haptic feedback to simulate a notch with variable latching forces, detent positions and resting lengths.

Patent document WO97/25657 describes an apparatus implementing a user interface device having electronically controllable tactile responsiveness which is flexibly programmable. An actuator is in communication with a servo motor and position encoder whereby the controller has access to torque-position information. This document states to have a rotary control knob whereby the motor is used as a torque controller.

Patent document EP0789321 describes an apparatus for providing detent-like tactile feedback to a user, comprising a shell, a rolling member rotatably provided within the shell, a motion sensing mechanism for determining displacement of the rolling member, at least one actuator and at least one brake member.

### SUMMARY OF THE INVENTION

The present invention is as set out in the appended claims.

The present invention is directed to many embodiments involving a force feedback knob. The knobs described herein provide greater functionality and relay greater tactile information to the user concerning the control task being performed with the knob than standard non-force-feedback controls and other limited force feedback controls.

The apparatus of the present invention provides an interface device including a force feedback knob that allows a user to conveniently provide input to manipulate functions or events in a host computer application program or electronic device. The linear and transverse degrees of freedom of the knob embodiment allow the user to select functions, settings, modes, or options with much greater ease and without having to take his or her hand off the knob.

These and other advantages of the present invention will become apparent to those skilled in the art upon a reading of the following specification of the invention and a study of the several figures of the drawing.

### BRIEF DESCRIPTION OF THE DRAWINGS

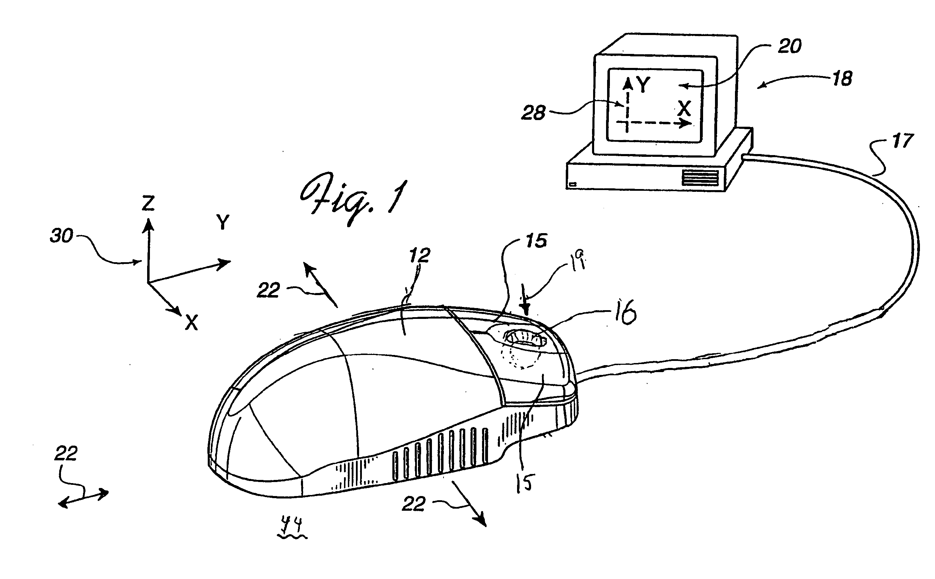

Figure 1 is a perspective view of one embodiment of a mouse interface system including a force feedback wheel outside of the scope of the present invention;
Figure 2 is a perspective view of a second embodiment of a force feedback mouse interface system including a force feedback wheel outside of the scope of the present invention;

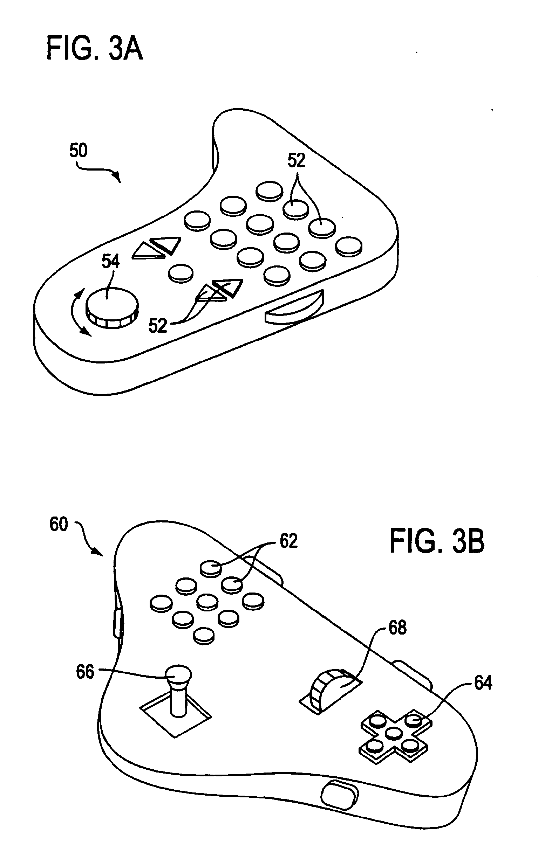

Figures 3a and 3b are perspective views of alternate embodiments of an interface device including a force feedback wheel outside of the scope of the present invention;

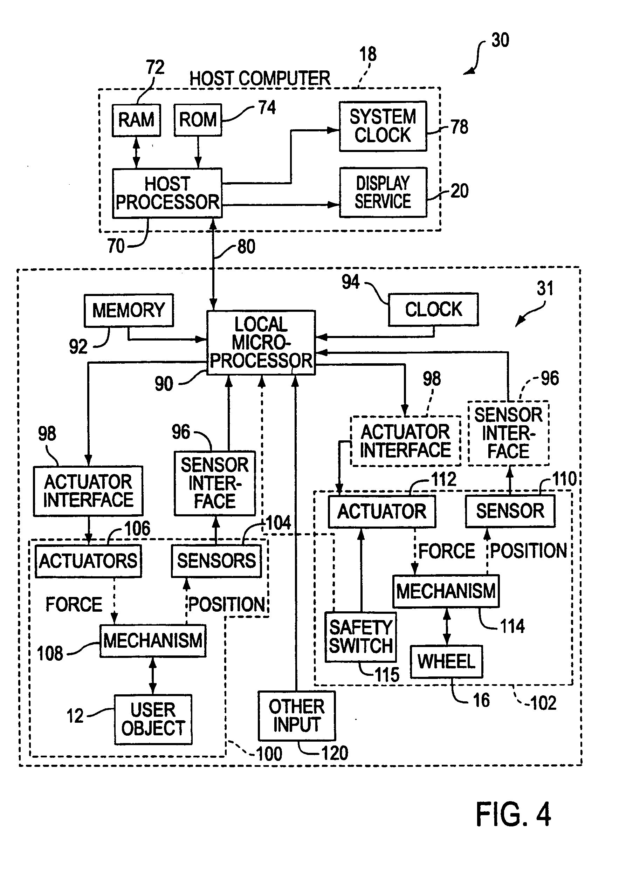

Figure 4 is a block diagram of the interface system including a force feedback wheel outside of the scope of the present invention;

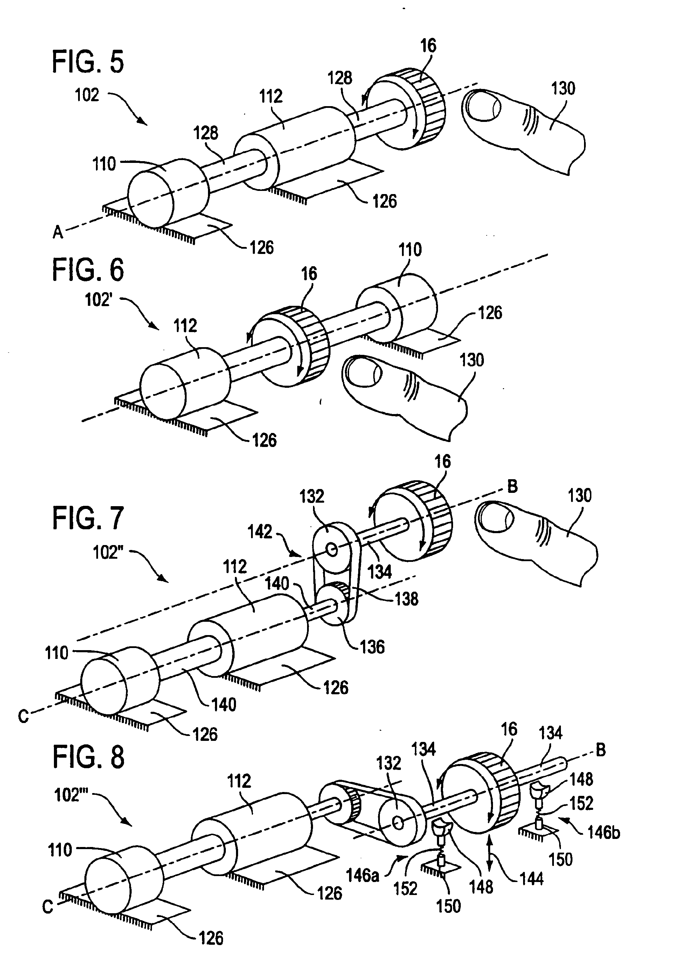

Figures 5 and 6 are perspective views of two embodiments of a direct drive mechanical portion of an interface device for a force feedback wheel outside of the scope of the present invention;
Figure 7 is a perspective view of an embodiment of a belt drive mechanical portion of the interface device for a force feedback wheel outside of the scope of the present invention;
Figure 8 is a perspective view of an embodiment outside of the scope of the present invention of a belt drive mechanism allowing a wheel to be depressed like a button; and

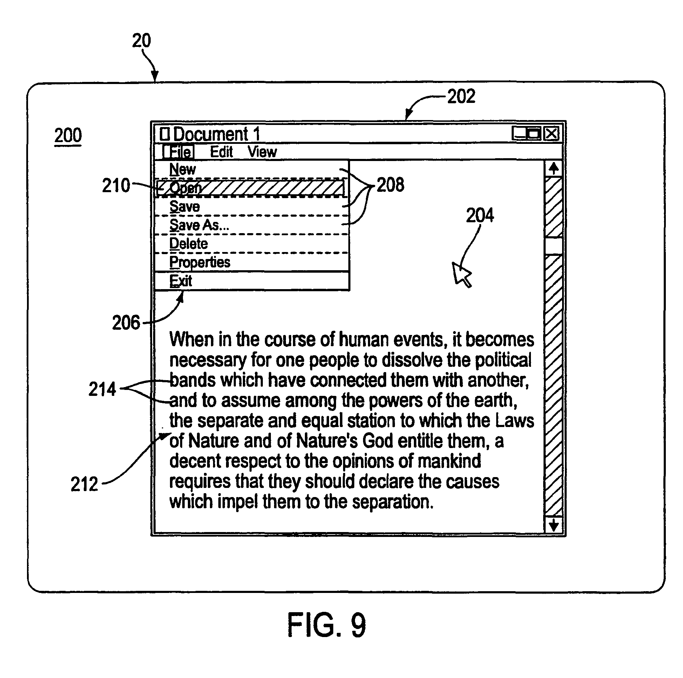

Figure 9 is a diagrammatic illustration of a GUI and graphical objects which can be manipulated using a force feedback wheel outside of the scope of the present invention.
Figure 10 is a perspective view of one embodiment of a device including a control knob of the present invention;
Figure 11 is a diagrammatic view of a display allowing the user to use the knob of the present invention to select features of the device;
Figure 12a is a perspective view of one embodiment of the mechanism for implementing the control knob of the present invention;
Figure 12b is a side elevational view of the embodiment of Fig. 12a;
Figure 13a is a perspective view of a second embodiment of the mechanism for implementing the control knob of the present invention;
Figure 13b is a top plan view of a unitary plate used in the embodiment of Fig. 13a;
Figure 13c is a side elevational view of the embodiment of Fig. 13a;
Figure 14 is a perspective view of a linear slider control outside of the scope of the present invention;
Figures 15a-15d illustrate nonoverlapping, overlapping, and hysteresis features of force detent profiles;
Figures 16a-16e are graphs illustrating the creation of detent force profiles from periodic waves according to the present invention; and
Figure 17 is a block diagram of a control system for the control knob of the present invention.

### DETAILED DESCRIPTION OF PREFERRED EMBODIMENTS

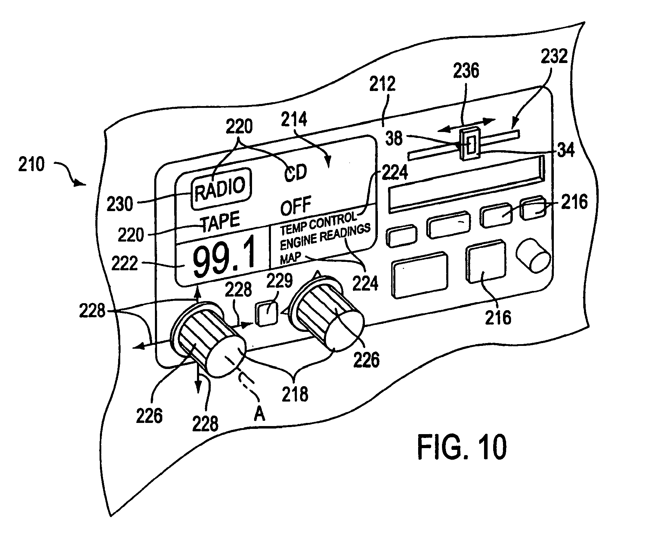

FIGURE 10 illustrates an application for a control knob embodiment of the present invention. A control panel 212 is provided for a device 210 and includes a control knob of the present invention. In the described embodiment, device 210 is an audio device that controls the output of sound, such as music or speech, from speakers that are connected to the device 210. For example, a common embodiment of device 210 is a stereo system that includes the ability to play sound from one or more media or signals, such as cassette tapes, digital audio transmission (DAT) tapes, compact discs (CD's) or other optical discs, or radio signals transmitted through the air from a broadcasting station.

The device 210 can also include additional or other functionality not related to audio control and output. For example, many vehicles include electronic systems to control the temperature in the vehicle cabin (air conditioning, heat, etc.), as well as systems to provide information on the current operating characteristics of the vehicle, such as current speed, engine temperature, fuel or other fluid levels, whether windows of the vehicle are open, etc. Other systems may include a navigation system that displays a map and the current location of the vehicle with respect to the map, a cellular telephone or other portable telephone control system, and a security/alarm system. Device 210 can include the ability to display information from and/or influence such other systems in a vehicle or other environment, such as a house, office, etc.

Alternatively, device 210 can be a variety of other electronic or computer devices. For example, device 210 can be a home appliance such as a television set, a microwave oven or other kitchen appliances, a washer or dryer, a home stereo component or system, a home computer, a set top box for a television, a video game console, a remote control for any device, a controller or interface device for a personal computer or console games, a home automation system (to control such devices as lights, garage doors, locks, appliances, etc.), a telephone, photocopier, control device for remotely-controlled devices such as model vehicles, toys, a video or film editing or playback system, etc. Device 210 can be physically coupled to the control panel 212, or the panel 212 can be physically remote from the device 210 and communicate with the device using signals transferred through wires, cables, wireless transmitter/receiver, etc.

Device 210 preferably includes a front panel 212, a display 214, several control buttons 216, and one or more control knobs 218 of the present invention. Front panel 212 can be mounted, for example, on the interior of a vehicle, such as on or below the dashboard, or in some other convenient area. Alternatively, the front panel 212 can be the surface of the external housing of the device 210 itself, such as a stereo unit. The device 210 may include several functions, such as playing an audio track, adjusting volume, tone, or balance of an audio output, displaying an image (icons, a map, etc.), or adjusting the temperature or fan speed in a vehicle, which can be changed or set by the user manipulating the controls of the device 210 on front panel 212.

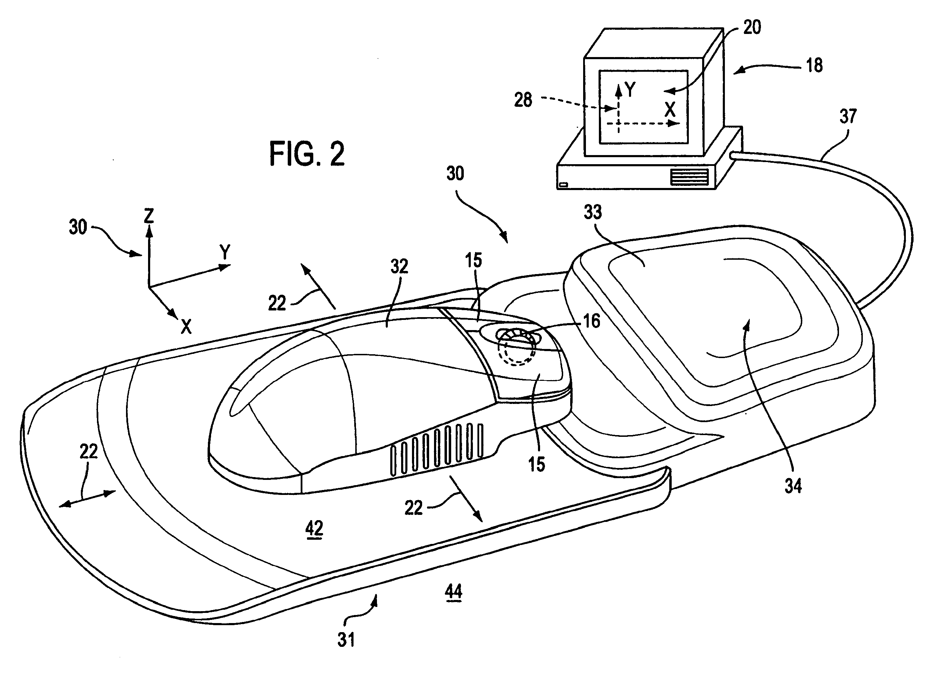

Display 214 is provided to show information to the user regarding the controlled device or system and/or other systems connected to the device 210. For example, options 220 can be displayed to indicate which function of the device 210 is currently selected. Such options can include "radio," "tape," "CD,", or power, as shown. Other information, such as the current radio frequency 222 selected for a radio tuner, can also be displayed. Furthermore, any information related to additional functionality of the device 210 can also be displayed. For example, information 224 can be provided to allow the user to select one or more functions not related to the audio operation of the device 210. In some embodiments, a map or similar graphical display can be shown on display 214 of an device 10 to allow the user to navigate. Some examples of functions displayed by a display 214 are shown with respect to Fig. 2, below. In other embodiments, display 214 can be a separate monitor displaying a graphical user interface or other graphical environment as controlled by a host computer. Display 214 can be any suitable display device, such as an LED display, LCD display, gas plasma display, CRT, or other device. In some embodiments, display 214 can include a touch-sensitive surface to allow a user to touch displayed images directly on the display 214 to select those images and an associated setting or function.

Control buttons 216 are often provided on device 210 to allow the user to select different functions or settings of the device. For example, on an audio device, buttons 216 can include radio station preset buttons, rewind/fast forward tape functions, power, speaker loudness, etc. Virtually any function of the device can be assigned to buttons 216. The buttons 216 may also be used in conjunction with the control knobs 218, as described below.

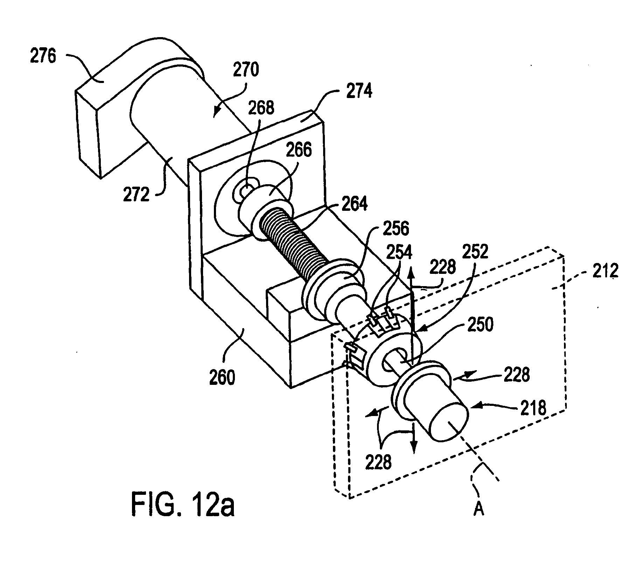

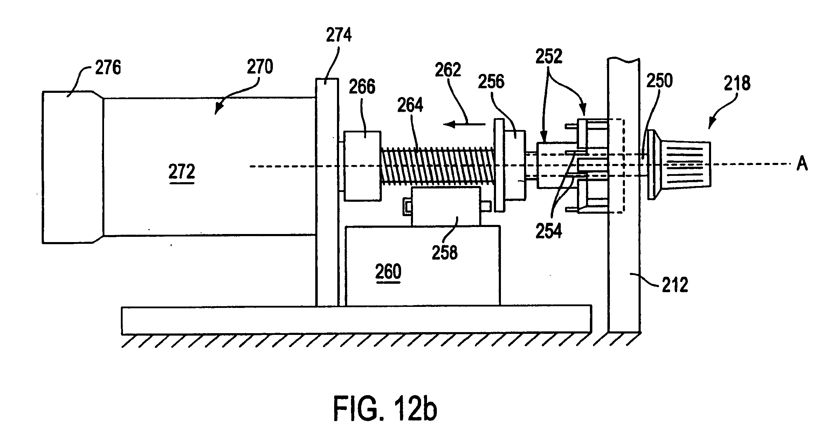

Control knobs 218 are provided to allow the user a different type of control of functions and settings of device 210 than the buttons 216 allow. Knobs 218, in the described embodiment, are approximately cylindrical objects engageable by the user. The knobs 218 can alternatively be implemented as a variety of different objects, including conical shapes, spherical shapes, dials, cubical shapes, rods, etc., and may have a variety of different textures on their circumferential surfaces, including bumps, lines, or other grips, or even projections or members extending from the circumferential surface. In addition, any of variety of differently-sized knobs can be provided; for example, if high-magnitude forces are output, a larger-diameter cylindrical knob is often easier for a user to interface with device 210. In the described embodiment, each knob 218 rotates in a single rotary degree of freedom about an axis extending out of the knob, such as axis A. The user preferably grips or contacts the circumferential surface 226 of the knob 218 and rotates it a desired amount. Force feedback can be provided in this rotary degree of freedom in some embodiments, as described in greater detail with reference to Figs. 12a and 12b.

Furthermore, the control knobs 218 of the present invention allow additional control functionality for the user. The knobs 218 are able to be moved by the user in one or more directions approximately perpendicular to the axis A of rotation, e.g. parallel to the surface of the front panel 212 as shown in Fig. 10 ("transverse motion" or "transverse direction"). This transverse motion is indicated by arrows 228. For example, the knob 218 can be moved in the four orthogonal directions shown, or may be moveable in less or more directions in other embodiments, e.g. only two of the directions shown, or in eight directions spaced at 45 degree intervals about axis A. Each transverse direction of the knob is spring loaded such that, after being moved in a direction 228 and once the user releases or stops exerting sufficient force on the knob, the knob will move back to its centered rest position.

This transverse motion of knob 218 can allow the user to select additional settings or functions of the device 210. In some embodiments, the additional control options provided by knob 218 allow the number of buttons 216 and other controls to be reduced, since the functions normally assigned to these buttons can be assigned to the knob 218. For example, the user can move a cursor 30 or other visual indicator on display 214 (e.g. pointer, selection box, arrow, or highlighting of selected text/image) to a desired selection on the display. Thus, the cursor 230 can be moved from the "radio" selection shown to the "tape" selection by moving the knob 218 in the down direction as shown in Fig. 10. Or, the cursor 230 can be moved to the "CD" selection by moving the knob 218 in the direction to the right. If knob 218 is provided with diagonal directions (e.g. at 45 degree intervals), the user can move the cursor 230 from the "radio" selection directly to the "off selection. The user can similarly move cursor 230 or a different indicator to the other information settings 224, to the frequency display 222, or to any other displayed option, setting, or area/region on the display 214.

Besides such a cursor positioning mode, the transverse motion of knob 218 can also directly control values or magnitudes of settings. For example, the left motion of knob 218 can decrease the radio station frequency value 222, where the value can decrease at a predetermined rate if the user continually holds the knob 218 in the left direction. The right motion of the knob 218 can similarly increase the frequency value 222. In another example, once one of the information settings 24 is selected, a sub menu can be displayed and the directions 228 of knob 218 can adjust air temperature, a timer, a cursor on a displayed map, etc.

Different modes can also be implemented; for example, the default mode allows the user to control cursor 230 using the directions 228 of the knob. Once the cursor is located at a desired setting, such as the frequency value 222, the user can switch the mode to allow the directions 28 to control the setting itself, such as adjusting the value 222. To switch modes, any suitable control can be used. For example, the user can push a button, such as button 229, to toggle a mode. Alternatively, the user can push or pull the knob 218 to select the mode; this functionality of the present invention is described below. Or, some or all of the directions 228 can be used to select modes; for example, the down direction might switch to "volume" mode to allow the user to rotate the knob to adjust volume; the up direction can switch to "adjust radio frequency" mode, and the left direction can switch to "balance" mode (for adjusting the speaker stereo balance for audio output with rotation of knob 218).

In addition, the control knobs 218 are preferably able to be pushed and/or pulled in a degree of freedom along axis A (or approximately parallel to axis A). This provides the user with additional ways to select functions or settings without having to remove his or her grip from the knob. For example, in one preferred embodiment, the user can move cursor 230 or other indicator on the display 214 using the directions 228 of the knob 218; when the cursor has been moved to a desired setting or area on the display, the user can push the knob 218 to select the desired setting, much like a mouse button selects an icon in a graphical user interface of a computer. Or, the push or pull function can be useful to control the modes discussed above, since the user can simply push the knob and rotate or move the knob while it is in the pushed mode, then release or move back the knob to select the other mode. The modes discussed above can also be toggled by pushing or pulling the knob 218. The push and/or pull functionality of the knob 218 can be provided with a spring return bias, so that the knob returns to its rest position after the user releases the knob. Alternatively, the knob can be implemented to remain at a pushed or pulled position until the user actively moves the knob to a new position.

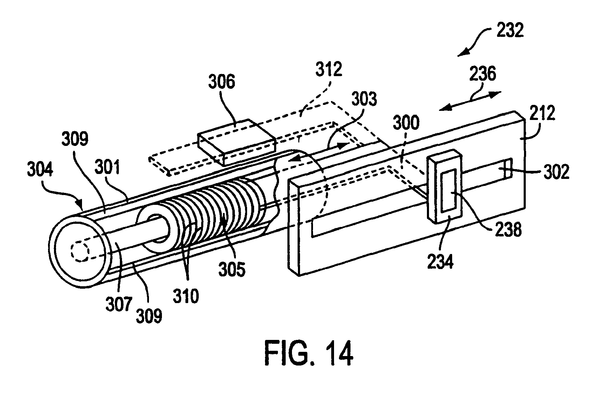

A slider control 232 of the present invention may also be included in device 210. Slider control 232 includes a slider knob 234 which is grasped by the user and moved in a linear direction as shown by arrow 236. In the present invention, slider control 232 preferably includes force feedback functionality. Thus, as the user moves the knob 234, force sensations such as a spring force, a damping force, jolts, detents, textures, or other forces can be output and felt by the user. Furthermore, the slider knob 234 can include a button 238 which can be pressed by the user similarly to the push knob embodiment discussed above with reference to knob 218. Alternatively, the knob 234 can be pushed and/or pulled similarly to the knob 218 as described above. Slider control 232 can control any of the various functions, settings, or options of the device 210. For example, the motion left or right of knob 234 can control the radio frequency 222, where force detents are output for each station and/or each preset station previously programmed by the user. Or, the cursor 230 can be moved using the slider knob 234, such that when the cursor reaches a desired setting or selection, the user can push button 238 or push on the knob 234 to select that setting. Other functions such as volume, balance, tone, map functions, temperature functions, or mode selection can also be controlled by the slider control 232. Slider control is described in greater detail with respect to Figure 14.

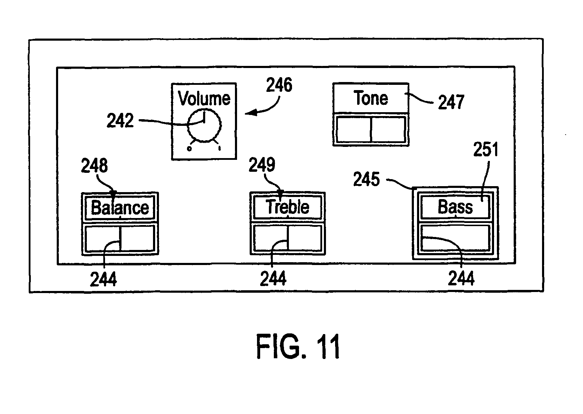

FIGURE 11 is an example showing images which can be displayed on display 214 to assist the user in selecting options with knobs 218 and/or slider control 232. Display 214 can present icons as shown, in this example for the control of audio output signals from device 210. Icon 246 is selected to control the volume of the audio output using knob 218, where the circular pointer 242 can be moved in accordance with the knob 218. Icon 247 is used to control the frequency of the radio tuner (the current selected frequency can be displayed as well), and the icons 248, 249, and 251 are used to control the balance, treble, and bass of the audio, respectively. For example, the indicator 244 can be moved left or right depending on the current setting. Cursor 245 is used to select one of the icons to allow the control of the functions associated with the selected icon. Cursor 245 indicates which of the icons in display 214 are currently selected. The icon can be moved from each icon to the next by rotating the knob 218. Alternatively, the transverse motion of the knob can move the cursor 245. A function of the device designed by the selected icon can be selected by pushing the knob 218 in the linear direction. The cursor can be a square or other-shaped box, or the currently-selected icon can be highlighted to indicate the cursor's location.

It should be noted that each of the icons can preferably be set to a position control mode or to a rate control mode as desired by the user. For example, the user may select position control for volume 246 and rate control for the functions of icons 247, 248, 249, and 251, or any other combination. In position control mode, force detents are preferably output to indicate particular settings or how far the knob 218 has been rotated. In rate control mode, detents can also be output. For example, the user maintains the knob 218 at a rotary position away from the center position in opposition to a spring return force, and a detent force (e.g., jolt) is output to indicate how much a particular value has been changed. For example, a jolt can be output for each 10 MHz of frequency that is increased, or for each particular amount of treble or bass that has been adjusted.

Other icons can be displayed in other embodiments. For example, an for vent location can be selected using cursor 245 to determine which vents in the car provide air flow, where a top vent, a bottom vent, or both top and bottom vents can be selected. A fan speed icon can be selected to choose a fan speed setting for the air flow from the vents in the car. In a preferred force feedback implementation, once the fan speed icon has been selected by pushing in the knob 218, the user may rotate the knob 218 to select the fan rotation speed in a position control mode. A small vibration can be output on the knob 218 in the rotary degree of freedom, where the frequency (or magnitude) of the vibration forces correlate with the magnitude of fan rotation speed, i.e., a high fan speed provides a fast vibration. Furthermore, detents are preferably output superimposed on the vibration forces so that the user can feel the fan settings at the detents. This allows the user to select fan speed based purely on tactile feel, so that the driver need not look at the display 214. A temperature icon can be selected to adjust the temperature in the car. The temperature can preferably be adjusted by rotating knob 218, where force detents indicate each temperature setting. Icons for moving mechanical components, such as seats or mirrors, can be provided, where a rate control force mode is used to control the position of the components.

FIGURE 12a is a perspective view and FIGURE 12b is a side elevational view of one implementation of control knob 218 of the present invention. In this implementation, knob 218 includes the ability to move transversely in four directions, and the knob 218 can also be pushed for additional selection ability.

Knob 218 is rigidly coupled to a rotatable shaft 250 which extends through the grounded front panel 212 (shown in dashed lines). Shaft 250 extends through a four-way switch 252 which detects the transverse motion of the knob 218 in directions 228. The knob 218 is biased toward the centered rest position within switch 252 by a spring member 264, described in greater detail below. When the shaft 250 is moved in any of the provided transverse directions, a corresponding micro switch (not shown) included on the interior sidewall of the four-way switch 52 is closed, thus causing a signal to be output on leads 254. Thus, switch 252 preferably includes individual micro switches, one for each provided transverse direction (four individual switches in the described embodiment). A suitable switch for use as switch 252 is a "hat switch" which is commonly provided for analog joystick controllers for personal computers and allows 4 or 8 directions to a moveable member. For example, joystick hat switches manufactured by such companies as CH Products, Inc. or Logitech can be used. In other embodiments, two-way, eight-way, or other types of switches can be used, depending on how many directions are desired.

A pusher member 256 is rigidly coupled to shaft 250 next to the switch 252. Since the switch 252 includes an aperture through which the shaft 250 extends, the knob 218, shaft 250 and pusher member 256 are operative to move as a unit along axis A with respect to the front panel (ground) and the switch 252. A switch 258 (see Fig. 12b) is coupled to a grounded member 260 and is provided in the path of the pusher member 256. Thus, when the knob 218 is pushed by the user, the shaft 250 and the pusher member 256 are moved along axis A in a direction indicated by arrow 262 (see Fig. 12b). This causes pusher member 256 to engage the button 264 of the switch 258, causing the button 264 to be pushed inward and close (or open) the switch. The pushing motion of the knob 218 is thus sensed.

In other embodiments, a sensor can be provided to sense a range of positions of the knob 218 or a continuous motion of the knob 218 linearly along axis A. For example, a Hall effect switch can be provided on pusher member 256 which measures the position of the pusher member 256 relative to a grounded magnet on member 260 (or the Hall effect switch can be placed on the member 260 and the magnet can be placed on the member 256). Or, an optical sensor (such as a photodiode) or other type of sensor can detect the position of the member 256 and/or knob 218. In such an embodiment, the position of the knob along axis A can proportionately control a function or setting of the device 210. For example, such movement can control the volume of audio output of the device, motion of a cursor across a display, or the brightness of lights inside a vehicle.

A pull switch can be implemented similarly to the push switch shown in Figs. 12a and 12b. For example, a switch similar to switch 258 can be grounded and provided on the opposite side of pushed member 256 so that when knob 218 is pulled in a direction opposite to direction 262, a button on this switch is engaged by the pusher member to detect the pulled motion. The pull motion of knob 218 can also be sensed in a continuous range similar to the push embodiments described above. In some embodiments, both push and pull motions of the knob 218 may be provided and sensed.

A spring member 264 is rigidly coupled to the pushing member 256 at one end and is rigidly coupled to a rotatable end member 266 at its other end. Spring member 264 is compressed when the knob 218 and pusher member 256 are moved in the direction of arrow 262. Spring member 264 thus provides a spring force that biases the knob 218 in the direction opposite to direction 262. If the knob 218 is not forced in direction 262, the spring bias moves the knob 218 opposite to direction 262 until the knob reaches its rest position. In those embodiments including a pull motion of the knob 218 in the direction opposite to direction 262, a spring member can be included on the opposite side of pusher member 256 to spring member 264, to bias the knob 218 in direction 262 after the user has pulled the knob.

Spring member 264 also provides the transverse motion of knob 218 in the directions 228. The flexure of the spring element allows the knob to move in transverse degrees of freedom, while still being relatively torsionally stiff to allow forces to be transmitted effectively from an actuator to the knob 218 about axis A.

End member 266 is coupled to a rotatable shaft 268 of an actuator 270. The housing 272 of actuator 270 is rigidly coupled to grounded member 274, and the shaft 268 rotates with respect to the housing 272 and the member 274. Actuator 272 can be controlled to output force on rotating shaft 68 about axis A, thus driving the shaft and all components rigidly coupled to the shaft about axis A. The shaft 268 thus rotates end member 266, spring member 264, pusher member 256, shaft 250, and knob 218. The output force on knob 218 is felt by the user as force feedback. Actuator 270 can be any of a variety of different types of actuators, including a DC motor, voice coil, pneumatic or hydraulic actuator, magnetic particle brake, etc. A sensor 276 has a shaft rigidly coupled to the rotating shaft 268 of the actuator 270 and thus detects the rotation of the shaft 268 and the knob 218 about axis A. Sensor 276 is preferably a digital optical encoder but can alternatively be a different type of sensor, such as an analog potentiometer, a photodiode sensor, a Hall effect sensor, etc.

The force feedback output on knob 218 can include a variety of different force sensations. The force feedback can be integrally implemented with the control functions performed by the knob. A basic force sensation is force detents that are output at particular rotational positions of the knob to inform the user how much the knob has rotated and/or to designate a particular position of the knob. The force detents can be simple jolts or bump forces to indicate the detent's position, or the detents can include forces that attract the knob to the particular rotational detent position and resist movement of the knob away from that position. The position can correspond to a particular radio station frequency or other station (e.g., television station frequency), thus making selection easier for the user. Such detents can be provided for additional functions, such as volume control for sound speakers, fast forward or rewind of a video cassette recorder or computer-displayed movie (such as a DVD movie), scrolling a displayed document or web page, etc. Force feedback "snap-to" detents can also be provided, for example, for the favorite station frequencies preprogrammed by the user, where a small force biases the knob to the detent position when it is just outside the position.

Also, the magnitude of the force detents can differ based on the value being controlled. For example, a radio frequency having a higher value might be associated with a stronger force detent, while a lower radio frequency might be associated with a weaker force detent when it is displayed, thus informing the user generally of the radio station being displayed without requiring the user to look at the display 214 (which is particularly useful when operating the device 210 while performing another task, such as driving a vehicle). In some embodiments, the user can also change the magnitude of detents associated with particular values, such as radio stations, to preferred values so as to "mark" favorite settings. Programmability of the location of the detents in the rotary degree of freedom is also convenient since preferred radio frequencies are most likely spaced at irregular intervals in the radio frequency range, and the ability to program the detents at any location in the range allows the user to set detents to those preferred stations. In addition, the knob can be moved by the actuator 270 to select the nearest preprogrammed station or preferred setting. Also, different sets of detent force profiles can be stored in a memory device on the device 230 and a particular set can be provided on the knob 218 by a microprocessor or other controller in the device 230.

Another type of force sensation that can be output on knob 218 is a spring force. The spring force can provide resistance to rotational movement of the knob in either direction to simulate a physical spring on the knob. This can be used, for example, to "snap back" the knob to its rest or center position after the user lets go of the knob, e.g. once the knob is rotated past a particular position, a function is selected, and the user releases the knob to let the knob move back to its original position. A damping force sensation can also be provided on knob 218 to slow down the rotation of the knob, allowing more accurate control by the user. Furthermore, any of these force sensations can be combined together for a single knob 218 to provide multiple simultaneous force effects.

The spring return force provided in the rotary degree of freedom of the knob 218 can also be used to implement a rate control paradigm. "Rate control" is the control of a rate of a function, object, or setting based on the displacement of the knob 218 from a designated origin position. The further the knob is moved away from the origin position, the greater the rate of change of controlled input. For example, if a rate control knob 218 with a spring return force is used to control the radio frequency, then the further the knob is moved from the center origin position, the faster the radio frequency will change in the appropriate direction. The frequency stops changing when the knob is returned to the origin position. The spring force is provided so that the further the user moves the knob away from the origin position, the greater the force on the knob in the direction toward the origin position. This feels to the user as if he or she is inputting pressure or force against the spring rather than rotation or displacement, where the magnitude of pressure dictates the magnitude of the rate. However, the amount of rotation of the knob is actually measured and corresponds to the pressure the user is applying against the spring force. The displacement is thus used as an indication of input force.

This rate control paradigm differs from the standard knob control paradigm, which is known as "position control", i.e. where the input is directly correlated to the position of the knob in the rotary degree of freedom. For example, in the radio frequency example, if the user moves the knob to a particular position, the radio frequency is changed to a particular value corresponding to the rotary position of the knob. Force detents are more appropriate for such a paradigm. In contrast, in the rate control example, moving the knob to a particular position causes the radio frequency to continue changing at a rate designated by the position of the knob.

Since the spring force and detent forces are programmable and can be output as directed by a microprocessor or other controller, a single knob 218 can provide both rate control and position control over functions or graphical objects. For example, a mode selector, such as a button or the push/pull knob motion, can select whether rate control or position control is used. One example of a force feedback device providing both rate control (isometric input) and position control (isotonic input) is described in greater detail in U.S. Patent No. 5,825,308. Such rate control and position control can be provided in the rotary degree of freedom of the knob 218. Also, if knob 218 is provided with force feedback in the transverse degrees of freedom or in the push/pull linear degree of freedom, then the rate control and position control modes can be provided in those degrees of freedom.

Other force sensations that can be output on knob 218 include forces that simulate ends of travel for the knob 218 or inform the user that the end of travel has been reached. For example, as the user rotates the knob in one direction to adjust the radio frequency 222, the end of the radio frequency range is reached. There is no hard stop on the knob 218 at this position, but the actuator 270 can be controlled to output an obstruction force to prevent or hinder the user from rotating the knob further in that direction. Alternatively, a jolt force can be output that is stronger in magnitude than normal detents, which informs the user that the end of the frequency range has been reached. The user can then continue to rotate the knob in that direction, where the displayed frequency 222 wraps around to the beginning value in the range.

In another alternate embodiment, one or more of the transverse motions of knob 218 in directions 228 can be actuated. For example, a greater range of motion can be provided for each transverse direction of the knob than typically allowed by a hat switch, and a linear or rotary actuator can be provided to output forces in the transverse degree of freedom, in one or both directions (toward the center position and away from the center position of the knob). For example, one or more magnetic actuators or solenoids can be used to provide forces in these transverse directions.

Furthermore, in other embodiments, the pull and/or push motion of knob 218 along axis A can be actuated. For example, a jolt force can be output on the knob in the linear degree of freedom along axis A as the user pushes the knob. Also, the spring return force provided by spring member 264 can instead be output using an actuator controlled by a microprocessor.

It should be noted that the embodiment of Figs. 12a and 12b is not the only embodiment of the present invention. For example, some embodiments may only include the transverse motion of knob 18 and not the push and/or pull functionality nor the force feedback functionality. Yet other embodiments may only include force feedback with transverse knob motion, or force feedback with push and/or pull functions.

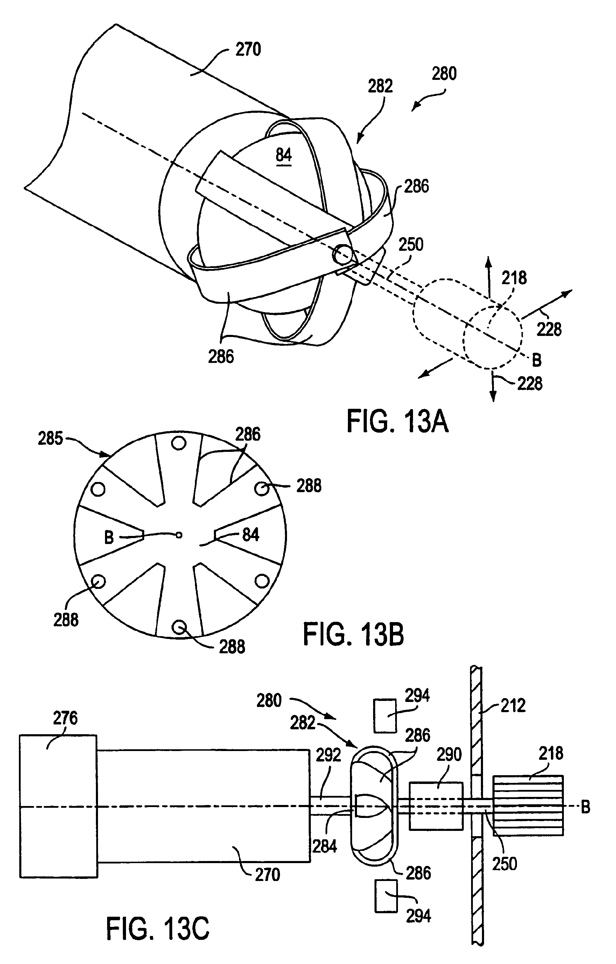

FIGURE 13a is a perspective view of an alternate embodiment 280 of the control knob 218 of the present invention. In embodiment 280, knob 218 is coupled to shaft 250, which is rigidly coupled to a flex member 282. Flex member 282 includes a base plate 284 and a plurality of bent portions 286 extending from the base plate 284. For example, as shown in FIGURE 13b, the flex member 282 can be formed by cutting out the circular base plate 284 and the portions 286 from a unitary piece 285 of material, such as spring steel or stainless steel. The unitary piece is preferably provided as a thin sheet. Holes 288 or other apertures can be placed near the ends of the portions 286. Referring back to Fig. 13a, the portions 286 are then bent such that the holes 288 substantially align with the other holes 288, where the holes 288 are aligned with axis B that extends approximately perpendicular to the surface of the base plate 284. The base plate 284 is rigidly coupled to the rotating shaft of the actuator 270.

FIGURE 13c is a side elevational view of the embodiment 280 of Fig. 13a. In the described embodiment, knob 218 is coupled to shaft 250, which extends through a switch 290 and is coupled to the bent portions 286 of the flex member 282. The switch 290 is preferably similar to the switch 252 described above with reference to Figs. 12a and 12b. For example, a microswitch can be provided on the inside surface of the housing of switch 290 for each transverse direction of knob 218 that is to be sensed. The base plate 284 of the flex member 282 is rigidly coupled to shaft 292 of actuator 270. The shaft 292 is rigidly coupled to a shaft (not shown) of sensor 276, which has a grounded housing that is coupled to the grounded housing of actuator 270.

Alternatively, a plurality of sensors can be positioned external to the flex member 282 instead of using switch 290. For example, switches 294 can be positioned on two or more sides around the flex member 282, depending on how many directions are to be sensed. Switches 294 can be contact switches that each detect when the portions 286 move to engage the contact switch, thus indicating movement of knob 218 in a particular transverse direction. Alternatively, members can be positioned on shaft 250 which extend to the sides of the shaft and which engage electrical contacts or other sensors. In other embodiments, other switches or sensors can be used, as described above in the embodiment of Fig. 12a. A spring (not shown) can also be coupled to the shaft 250, flex member 282, or knob 218 to provide linear motion along the axis B and allow the knob 218 to be pushed and/or pulled by the user, as described in the embodiment of Fig. 12a. Some types of flexible couplings that allow transverse motion of the knob 218 may also allow linear motion along axis B, such as flexible disc servo couplings, in which case such as spring may not be needed.

In operation, the transverse motion of knob 218 in embodiment 280 operates as follows. The knob 218 is moved by the user approximately in a transverse direction 228, which causes the shaft 250 to move with the knob by pivoting approximately about the end of the shaft 250 where it is coupled to the portions 286. Shaft 250 is allowed such movement due to the flexibility in portions 286. In some embodiments, the knob 218 is also allowed to translate in a transverse direction 228 as well as or in addition to pivoting approximately in directions 228. When the knob 218 is rotated about axis B (by the user or the actuator), the shaft 250 rotates about its lengthwise axis, causing the flex member 282 to rotate about axis B. Since the portions 286 are stiff in the rotational direction about axis B, torque output on the shaft 250 and on the flex member 282 is transmitted accurately from actuator 270 to knob 218 and from knob 18 to sensor 276. Thus, the rotation on flex member 292 causes the shaft 92 to rotate, which is sensed by sensor 276. The rotational force about axis B output by actuator 70 is similarly transmitted from shaft 292, through flex member 282, to shaft 250 and knob 218.

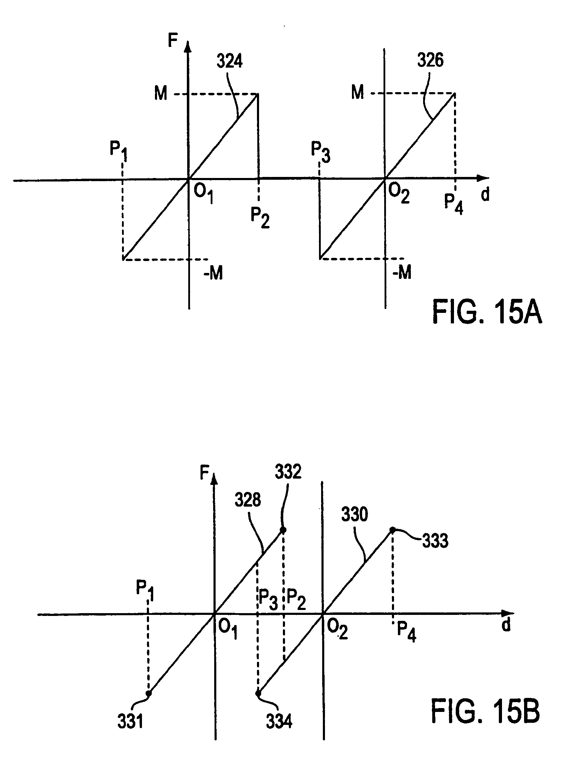

FIGURES 15a and 15b are diagrammatic illustrations illustrating detent force profiles suitable for use with the knobs of device 210. Detent force profiles can be implemented by a microprocessor or other controller based on instructions stored in a computer readable medium, such as a memory circuit, magnetic disk, optical disk, etc. In Fig. 15a, a detent force profile is shown. The vertical axis F represents the magnitude of force output, where a positive F value indicates force in one direction, and a negative F value indicates force in the opposite direction. The horizontal axis d represents the distance or position of the moved user object (knob) in a degree of freedom, where the origin position O indicates the position of the detent, a positive d is a position past the origin of the detent in one direction, and a negative d is a position past the origin of the detent in the opposite direction. The curve 324 represents the force output for a single detent over a position range for the detent. Thus, for example, if the user moves the knob clockwise toward the detent origin O1, the motion may be from the left toward the origin O1 on the axis d. A force toward the origin is output at position P1 at a magnitude -M to assist the user in moving the knob clockwise toward the origin. As the user continues to move the knob clockwise toward the origin O1, the assisting force is decreased in magnitude until no force is output when the knob is positioned at the origin position. If the user moves the knob counterclockwise from the origin position O1 (from right to left), the force will resist such motion in an increasing manner until the knob has been moved to position P1, after which the force magnitude drops to zero. Similarly, on the positive side of the d axis, if the user rotates the knob clockwise away from the detent origin position O1 (corresponding to movement from left to right), an increasing magnitude of force is output until the knob reaches the position P2, at which point the force magnitude drops from its maximum at M to zero. If the user moves the knob counterclockwise from position P2 toward the origin O1, the user initially feels a large magnitude force assisting that movement, after which the assisting force gradually decreases until it is zero at the origin O1. Preferably, point P1 is at an equal distance from origin O1 as point P2.

Additional detents may be positioned in the degree of freedom of the knob in successive positions, represented along axis d. For example, curve 326 represents another detent that is encountered shortly after leaving the previous detent curve 324 when turning the knob in a particular direction.

A problem occurring with closely spaced detents is that often the user moves the knob from a first detent to a second detent but unintentionally moves the knob past the second detent due to the assistive detent forces of the second detent. This is because the force from the user required to move the knob past the resistive force of the first detent curve is combined with the assistive force of the second detent curve, causing the knob to unintentionally move past the second origin and past the endpoint of the second detent curve. Furthermore, the same problem occurs when the user moves the knob in the opposite direction, from the second detent to the first detent. The user must exert force to overcome the resistance at the last point of the second detent curve, which causes the knob to quickly move past the first point of the first detent curve, where the assistive force is added to the motion to cause the knob to unintentionally move past the last encountered point of the first detent.

Fig. 15b shows a detent force profile of the present invention in which the detent forces of two successive detents are partially overlapped due to the detents, and provide a hysteresis-like force effect. The two detent curves 328 and 330 are identical, thus allowing a single force command to create the multiple detents if desired. Endpoint 331 of curve 328 is positioned at position P1 and endpoint 332 of curve 328 is positioned at position P2, where P2 is about the same distance from origin O1 as P1. Similarly, endpoint 334 of curve 330 is positioned at position P3 and endpoint 333 of curve 330 is positioned at position P4, where P4 is about the same distance from origin 02 as P3. Detent curve 328 ends at endpoint 332 on the right side of origin O1 and within the range of forces of detent curve 330. Preferably, the end point 332 of curve 328 is positioned well after the endpoint 334 of curve 330, such that the point 332 has a position in the middle of the range between point 334 and the origin 02. The overlapped zone is between positions P3 and P2. In addition, the end point 332 of the first detent preferably does not extend past the origin 02 of the second detent into the positive side of the second detent. If another detent is positioned further on the d axis after curve 330, the end point 333 of curve 330 preferably is positioned well after the starting endpoint of the next detent curve and not past the origin of the next detent curve. Similar positioning can be provided for curves before curve 328 on axis d.

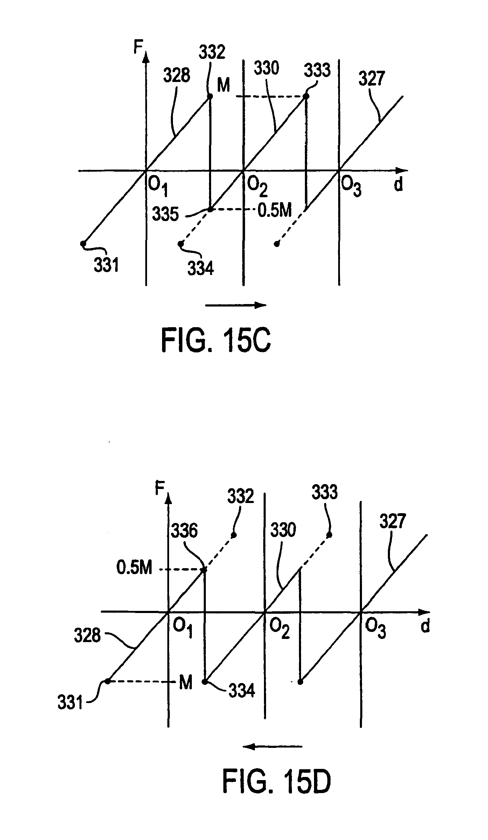

To solve the problem of unintentionally moving past a successive detent, the range of the second or successive detent is adjusted such that a lesser magnitude is preferably output at the beginning of the successive detent than would normally be output if the entire curve of the successive detent were used. Furthermore, the force detent curve used to output force is preferably different depending on the direction of the knob, similar to a hysteresis effect. As shown in FIGURE 15c, when moving the knob so the knob position changes from left to right, the force at the beginning of the range of detent curve 330 is at point 335 having a magnitude of 0.5M, which is one-half the magnitude M of the force at the other endpoint 333 of the range of curve 330 (ignoring the signs or direction of the forces). Of course, in other embodiments point 335 can have a magnitude of other fractions of M, such as one-third or three-fourths of M. Additional curve 327 can be similarly positioned and provide a similar overlap with curve 330, and additional curves may be added before curve 328 and/or after curve 327.

As shown in FIGURE 15d, when moving the knob in the other direction so the knob position changes from right to left, the endpoints of the curve 330 reverse in magnitude with respect to the endpoints shown in Fig. 15c. In Fig. 15d, starting from origin 02, the force at the beginning of the range of detent curve 328 is at point 336 having a magnitude of 0.5M, which is one-half the magnitude M of the force at the other endpoint 331 of curve 328 (other fractions of M can be provided for endpoint 336 in other embodiments). Any additional curves, such as curve 327, can be provided with a similar overlap. The force output on the knob thus changes depending on the direction of the knob. In a digital sensing system (e.g. using a digital encoder), the direction can be determined from a history of sensed values. For example, one or more sensed position values can be stored and compared to a current sensed position to determine the knob direction.

The use of a lesser magnitude at the beginning of the second detent reduces the tendency of the user to unintentionally skip past a second detent after moving the knob over a first detent closely spaced to the second detent. For example, when moving the knob left to right (e.g., clockwise) from position P1, a first detent (curve 328) ends at point 332 of curve 328, after which the force magnitude of point 335 on curve 330 begins assisting the knob's movement. This magnitude is less than the magnitude of the "original" beginning point 334, i.e. the beginning point of the full curve 330. Thus, less force is assisting the user to move toward the origin 02 of curve 330 than if the force magnitude for beginning point 334 of the curve 330 were in effect. With less force assisting motion toward origin 02, the user has an easier time slowing down the knob and preventing the knob from unintentionally overshooting the origin 02. Furthermore, the changing of endpoints of the detent curve, as dependent on direction, provides a hysteresis-like effect the reduces the unintentional skip in both directions. Thus, when moving the knob from right to left (e.g., counterclockwise) starting at origin 02, a first detent (curve 330) ends at point 334 of curve 330, after which a magnitude of point 336 on curve 328 begins assisting the knob's movement. This magnitude is less than the magnitude of the "original" beginning point 334. Thus, less force is assisting the user to move toward the origin O1 of curve 328 than if the force magnitude for beginning point 332 of the curve 328 were in effect. With less force assisting motion toward origin O1, the user has an easier time slowing down the knob and preventing the knob from unintentionally overshooting the origin O1.

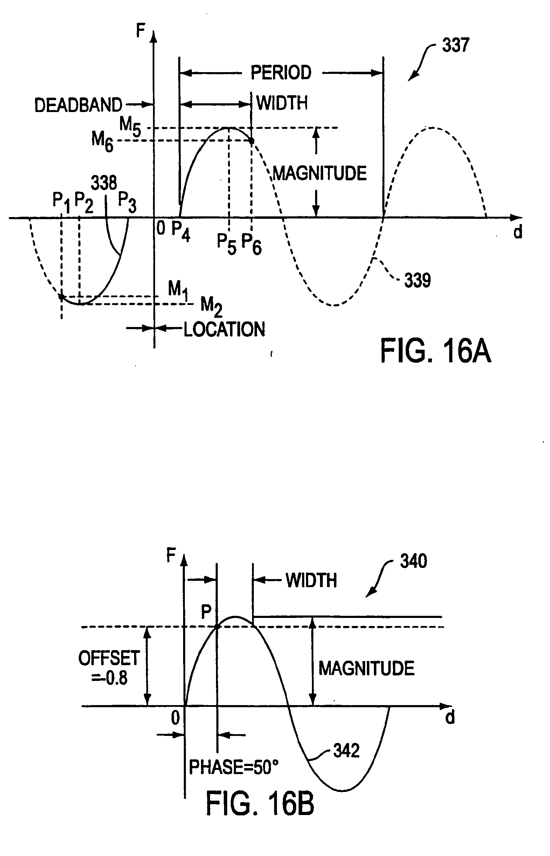

The same overlapping and hysteresis feature can be provided for differently-shaped detents as well, such as curved detents of Figs. 16a-16e, detents having deadbands around the origin O, and/or other-shaped force profiles. In embodiments having detent endpoints that are spaced further apart, or which have very gradually-sloping curves, the overlap and hysteresis may not be needed since there may be enough space in the degree of freedom for the user to control the knob from unintentionally moving past the next detent.

FIGURE 16a is a graph illustration 337 of a periodic wave 339 that can be used to provide a variety of detent force sensations for use with the knob control device of the present invention. The periodic wave represents force exerted on the knob (axis F) vs. the position or displacement (axis d) of the knob, similar to the force detent profile shown in Figs. 15a and 15b. The wave 339 is a periodic function, such as a sine wave, triangle wave, square wave, etc. In Fig. 16a, a sine wave shape is shown. In the present invention, a portion of the wave may be used to provide detent and other force sensations for the knob 218 or 234. Various parameters of the sine wave are shown in Fig. 16a, including period and magnitude.

Curve 338 (solid line) represents a detent force effect that has been created based on the sine wave 339. Curve 338 has a width, which is the amount of the wave 339 along axis d used for the force detent. The location of the detent is the position in the degree of freedom at which the detent force is centered, i.e. the location of the origin position O of the detent. A deadband can be defined to be a distance from the origin O to a specified point, a region in which zero forces are output on the knob. Thus, the curve 338 shown in Fig. 16a shows a detent force starting at a magnitude M1 at location P1 and, when the knob is moved toward the origin O, the force increases to the maximum point M2 at location P2 and then decreases until point P3, where the deadband is reached (zero magnitude). Similarly, at point P4 on the other side of the origin O, the force increases from zero to a maximum magnitude M5 at location P5, after which the force drops a short distance to magnitude M6 at location P6. The force then drops to zero for increasing d, until another detent effect is encountered. The small decreases in force magnitude from the maximum magnitude at the end points of the curve 338 are useful in some detent embodiments to provide a less extreme assistive or resistive force to the user when entering or exiting the detent range, e.g., to gradually lead the user into the detent range before outputting the maximum force. This can provide a smoother-feeling and, in some cases, a more easily-selected detent (i.e., it can be easier to position the knob at the detent's origin).

The detent curve 338 can thus be defined using the parameters shown in Fig. 16a. For example, a force command protocol can provide a number of different commands that can cause the output of different force sensations to the user. The commands can each include a command identifier followed by one or more command parameters that define and characterize the desired force sensation. An example of a command defining a detent curve 338 is as follows:

### DETENT (TYPE, PERIOD, MAGNITUDE, LOCATION, DEADBAND, FLAG, WIDTH, PHASE, OFFSET, LOCATION, INCREMENT, ARRAY POINTER)

The DETENT identifier indicates the type of force sensation. The TYPE parameter indicates a type of periodic wave from which to base the force detent curve, such as a sine wave, triangle wave, square wave, ramp, etc. The PERIOD and MAGNITUDE parameters define those characteristics of the periodic wave. The LOCATION parameter defines the location of the origin position for the detent in the degree of freedom of the knob. The DEADBAND parameter indicates the size of the deadband around the origin position. The FLAG parameter is a flag that indicates whether the detent is provided on the positive side, the negative side, or both sides around the location (origin position). The WIDTH parameter defines the amount of the wave 339 used for the detent curve, i.e. the extent of the wave used starting from the PHASE position. The PHASE parameter indicates the starting position of the detent curve 338 on the wave 339 (and is described in greater detail below). The OFFSET parameter indicates the amount of magnitude offset that curve 338 includes from the d axis, and is described in greater detail below. The INCREMENT parameter indicates the distance in the degree of freedom of the knob between successive detent locations. The optional LOCATION ARRAY POINTER parameter indicates a location in a separate array that has been previously programmed with the particular positions in the degree of freedom of the knob at which the detents are located and (optionally) the total number of detents; the array can be provided in memory, such as RAM, or other writable storage device. For example, the array can be preprogrammed with three detents, at locations of 45 degrees, 78 degrees, and 131 degrees in the rotation of the knob. The array can be accessed as necessary to retrieve these locations at which detent forces are to be output. This can be useful when the detent locations are not evenly or regularly spaced in the degree of freedom, and/or when a particular number of detents is desired to be output.

Furthermore, in other embodiments, a periodic wave can be additionally "shaped" to form a particular detent curve. For example, an "envelope" can be applied to a periodic wave to shape the wave in a particular way. One method of shaping a wave is to define a first magnitude and a settle width, which is the distance required for the wave to settle to a second, lesser magnitude from the first magnitude. This settle width thus provides a ramping shape to the upper and/or lower portions of the periodic wave about axis d. Although such shaping is performed in a spatial domain, it is similar to shaping a signal in the time domain. The shaping can be specified by parameters in a commands, such as a settled width parameter, magnitude parameters, etc.

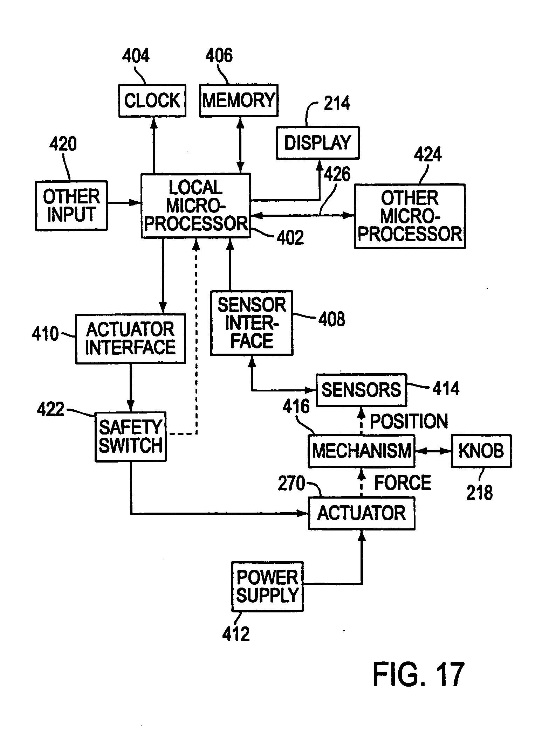

The detent command can be sent by a supervisory microprocessor to a lower-level local microprocessor to decode and interpret the commands to control procedures provided in device 210 in firmware or other storage medium, as described with reference to Fig. 17 below. If a host computer and local microprocessor are used, the host computer can send the command to the local microprocessor, which parses/decodes and interprets the command and causes appropriate forces to be output. Commands and protocols for use in force feedback are described in greater detail in U.S. Patent 5,734,373, incorporated by reference herein. Such commands can also be retrieved from a storage device such as memory and then parsed and interpreted by a local microprocessor.

The ability to define a force detent (in the spatial domain) in terms of a periodic waveform can be useful in force feedback implementations in which periodic force effects in the time domain are also provided. For example, vibration force sensations can be provided by outputting a periodic sine wave or square wave for the magnitude of the force over time. If such time-based effects can be output on knob 218 or 234, then it is convenient to use the same periodic wave definitions and data for defining force vs. position profiles for detents as shown in Figs. 16a-16e.

FIGURE 16b is a graph illustration 340 showing particular parameters of the detent command described above which are applied to a periodic wave. Sine wave 342 has a magnitude and period as shown. A specified phase of the desired detent curve causes the detent curve to start at a position on wave 342 in accordance with the phase. For example, in Fig. 16b, a phase of 50 degrees is specified. This will cause the resulting detent curve to start at point P on the wave 342. A width parameter specifies the amount of the wave from the phase location to be used as the detent curve. Furthermore, an offset of -0.8 is indicated. This causes the resulting detent curve to be shifted down by 80% from the wave 342. Furthermore, a deadband is also specified (not shown in Fig. 16b.).

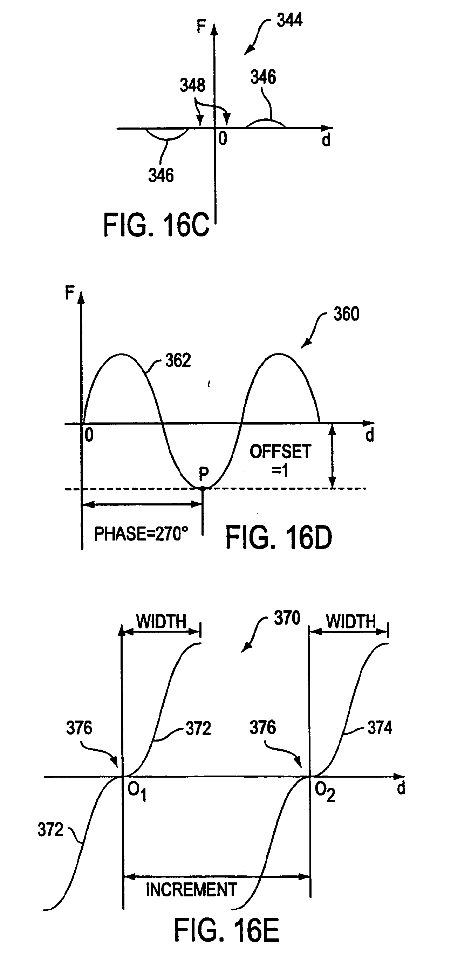

FIGURE 16c is a graph 344 showing the resulting detent curve 346 obtained from the application of the parameters to the wave 342 described with reference to Fig. 16b. The portion of the wave 342 starting at the phase and positioned above the offset line in Fig. 16b is used in the detent curve 346. Furthermore, a deadband 348 has been added to the curve. The flag in the detent command has caused the positive side of the curve 346 to be mirrored on the negative side of the origin O. This detent curve 346 causes a detent force that is similar to the detent force described with reference to Fig. 16a, only smaller in magnitude and in position range over the degree of freedom of the knob.

FIGURE 16d is a graph 360 showing a periodic wave and parameters to be applied to the wave. Sine wave 362 is provided as described above, having a particular period and magnitude. An offset is specified for the resulting detent curve; in the example of Fig. 16d, the offset is 1, thus causing the detent curve to be shifted upward by its entire magnitude. A phase of 270 degrees is also indicated, so that the detent curve starts at the lowest magnitude of the wave 372 at point P. Furthermore, an increment is also specified as a parameter (not shown). FIGURE 16e is a graph 370 illustrating the detent curves 372 and 374 resulting from the wave 362 and parameters described with reference to Fig. 16d. The portion of the wave 362 past point P and ending at a point defined by a width parameter is provided both on the positive side and the negative side of origin O1 of graph 370 for curve 372 (the positive and negative sides are designated by the flag parameter). A second curve 374 is also shown, where the origin 02 of the second curve is positioned at a distance from the origin O1 as specified by the increment parameter. Additional curves similar to curves 372 and 374 are provided at further distances at same increment from each other. The detent curves 372 and 374 provide a much steeper, less gradual detent force over the detent range than the other detent forces shown in Figs. 16a and 16c. Furthermore, no actual deadband is specified, although the shape of each half of the curve 372 provides a small zone 376 where zero force is output, similar to a deadband.

FIGURE 17 is a block diagram illustrating an electromechanical system 400 for the device 210 of Fig. 10 suitable for use with the present invention. A force feedback system including many of the below components is described in detail in Patent number 5,734,373.

In one embodiment, device 210 includes an electronic portion having a local microprocessor 402, local clock 404, local memory 406, sensor interface 408, and actuator interface 410.

Local microprocessor 402 is considered local to device 210 and is preferably similar in type and function to microprocessor 90, described above. Microprocessor 402 can include one microprocessor chip, or multiple processors and/or co-processor chips, and can include digital signal processor (DSP) functionality. Also, "haptic accelerator" chips can be provided which are dedicated to calculating velocity, acceleration, and/or other force-related data. Alternatively, fixed digital logic and/or state machines can be used to provide similar functionality.

A local clock 404 can be coupled to the microprocessor 402 to provide timing data, for example, to compute forces to be output by actuator 270; or timing data for microprocessor 402 can be retrieved from the USB interface. Local memory 406, such as RAM and/or ROM, is preferably coupled to microprocessor 402 in interface device 210 to store instructions for microprocessor 402, temporary and other data, calibration parameters, adjustments to compensate for sensor variations, and/or the state of the device 210. Display 214 can be coupled to local microprocessor 402 in some embodiments. Alternatively, a different microprocessor or other controller can control output to the display 214.

Sensor interface 408 may optionally be included in device 210 to convert sensor signals to signals that can be interpreted by the microprocessor 402. Alternately, microprocessor 402 can perform these interface functions. Actuator interface 410 can be optionally connected between the actuator 270 and microprocessor 402 to convert signals from microprocessor 402 into signals appropriate to drive the actuators. Actuator interface 410 can include power amplifiers, switches, digital to analog controllers (DACs), and other components, as well known to those skilled in the art. In alternate embodiments, actuator interface 410 circuitry can be provided within microprocessor 402 or in the actuator 270. A power supply 412 can be coupled to actuator 270 and/or actuator interface 410 to provide electrical power. In a different embodiment, power can be supplied to the actuator 270 and any other components (as required) by an interface bus. Power can also be stored and regulated by device 210 and thus used when needed to drive actuator 270.

A mechanical portion is included in device 210, an example of which is shown above in Figs. 12a-12b and 13a-13c. The mechanical portion can include some or all of the components needed for rotational motion of knob 218, transverse motion of knob 218, the push and/or pull motion of knob 218, and force feedback in any or all of these degrees of freedom of the knob.

Mechanical portion 400 preferably includes sensors 414, actuator 270, and mechanism 416. Sensors 414 sense the position, motion, and/or other characteristics of knob 218 along one or more degrees of freedom and provide signals to microprocessor 402 including information representative of those characteristics. Typically, a sensor 414 is provided for each degree of freedom along which knob 218 can be moved, or, a single compound sensor can be used for multiple degrees of freedom. Sensors 414 can include sensor 276, switch 252, and switch 258 as shown in Figs. 12a-12b. For example, one switch 252 of Figs. 12a-12b or switch 290 of Fig. 13c can include a sensor switch for each transverse direction 228 that the knob 218 can be moved. Examples of sensors suitable for rotary sensor 276 of Figs. 12a-12b and 13a-13c include optical encoders, analog sensors such as potentiometers, Hall effect magnetic sensors, optical sensors such as a lateral effect photo diodes, tachometers, and accelerometers. Furthermore, both absolute and relative sensors may be used.

In those embodiments including force feedback, actuator 270 transmits forces to knob 218 in one or more directions in a rotary degree of freedom in response to signals output by microprocessor 402 or other electronic logic or device, i.e., it is "electronically-controlled." The actuator 270 produces electronically modulated forces which means that microprocessor 402 or other electronic device controls the application of the forces. Typically, an actuator 270 is provided for each knob 218 that includes force feedback functionality. In some embodiments, additional actuators can also be provided for the other degrees of freedom of knob 218, such as the transverse motion of the knob 18 and/or the push or pull motion of the knob. The actuators, such as actuator 270, can include active actuators, such as linear current control motors, stepper motors, pneumatic/hydraulic active actuators, a torquer (motor with limited angular range), voice coil actuators, etc. Passive actuators can also be used, including magnetic particle brakes, friction brakes, or pneumatic/hydraulic passive actuators, and generate a damping resistance or friction in a degree of motion. In some embodiments, all or some of sensors 414 and actuator 270 can be included together as a sensor/actuator pair transducer, as shown in Figs. 12a-12b for actuator 270 and sensor 276.

Mechanism 416 is used to translate motion of knob 218 to a form that can be read by sensors 414, and, in those embodiments including force feedback, to transmit forces from actuator 270 to knob 218. Examples of mechanism 416 are shown with respect to Figs. 12a-12b and 13a-13c. Other types of mechanisms can also be used, as disclosed in U.S. Patent Nos. 5,767,839, 5,721,566, 5,805,140. Also, a drive mechanism such as a capstan drive mechanism can be used to provide mechanical advantage to the forces output by actuator 270, as described in patent no. 5,731,804. Alternatively, a belt drive system, gear system, or other mechanical amplification/transmission system can be used.

Other input devices 420 can be included in interface device 210 and send input signals to microprocessor 402. Such input devices can include buttons, such as buttons 216 on front panel 212 as shown in Fig. 10, used to supplement the input from the knob to the device 210. Also, dials, switches, voice recognition hardware (e.g. a microphone, with software implemented by microprocessor 402), or other input mechanisms can be used can also be included to send a signal (or cease sending a signal) to microprocessor 402 or to the actuator 270 or actuator interface 410, indicating that the user is not gripping the knob 218, at which point all output forces are ceased for safety purposes. A safety or "deadman" switch 422 can optionally be included for the knob 218 in those implementations providing force feedback on the knob. Safety switches are described in patent no. 5,691,898..

Other microprocessor 424 can be included in some embodiments to communicate with local microprocessor 402. Microprocessors 402 and 424 are preferably coupled together by a bi-directional bus 426. Additional electronic components may also be included for communicating via standard protocols on bus 426. These components can be included in device 210 or another connected device. Bus 426 can be any of a variety of different communication busses. For example, a bi-directional serial or parallel bus, a wireless link, a network architecture (such as Canbus), or a uni-directional bus can be provided between microprocessors 424 and 402.

Other microprocessor 424 can be a separate microprocessor in a different device or system that coordinates operations or functions with the device 210. For example, other microprocessor 424 can be provided in a separate control subsystem in a vehicle or house, where the other microprocessor controls the temperature system in the car or house, or the position of mechanical components (car mirrors, seats, garage door, etc.), or a central display device that displays information from various systems. Or, the other microprocessor 424 can be a centralized controller for many systems including device 210. The two microprocessors 402 and 424 can exchange information as needed to facilitate control of various systems, output event notifications to the user, etc. For example, if other microprocessor 424 has determined that the vehicle is overheating, the other microprocessor 424 can communicate this information to the local microprocessor 202, which then can output a particular indicator on display 214 to warn the user. Or, if the knob 218 is allowed different modes of control, the other microprocessor 424 can control a different mode. Thus, if the knob 218 is able to control both audio stereo output as well as perform temperature control, the local microprocessor 402 can handle audio functions but can pass all knob sensor data to other microprocessor 424 to control temperature system adjustments when the device 210 is in temperature control mode.

In other embodiments, other microprocessor 424 can be a microprocessor in a host computer, for example, that commands the local microprocessor 402 to output force sensations by sending host commands to the local microprocessor. The host computer can be a personal computer, workstation, video game console, or other computing or display device as described in previous embodiments. The host computer can implement a host application program with which a user interacts using knob 218 and/or other controls and peripherals. The host application program can be responsive to signals from knob 218 such as the transverse motion of the knob, the push or pull motion, and the rotation of the knob (e.g., the knob 218 can be provided on a game controller or interface device such as a game pad, joystick, steering wheel, or mouse that is connected to the host computer). In force feedback embodiments, the host application program can output force feedback commands to the local microprocessor 402 and to the knob 218. In a host computer embodiment or other similar embodiment, microprocessor 402 can be provided with software instructions to wait for commands or requests from the host computer, parse/decode the command or request, and handle/control input and output signals according to the command or request.

For example, in one force feedback embodiment, host microprocessor 424 can provide low-level force commands over bus 426, which microprocessor 402 directly transmits to the actuators. In a different force feedback local control embodiment, host microprocessor 424 provides high level supervisory commands to microprocessor 402 over bus 426, and microprocessor 402 manages low level force control loops to sensors and actuators in accordance with the high level commands and independently of the host computer, similar to the embodiments for wheel 16 described above.

In an alternate embodiment, no local microprocessor 402 is included in interface device 210, and a remote microprocessor, such as microprocessor 424, controls and processes all signals to and from the components of interface device 210. Or, hardwired digital logic can perform any input/output functions to the knob 218.

While this invention has been described in terms of several preferred embodiments, it is contemplated that alterations, permutations and equivalents thereof will become apparent to those skilled in the art upon a reading of the specification and study of the drawings. For example, many types of actuators, sensors, and mechanisms can be used to sense and apply forces on the knob. In addition, the knob itself can be implemented in a variety of ways, as a dial, cylinder, knob, sphere, or other shape. Also, a great variety and types of force sensations can be output on the knob. It should also be noted that the embodiments described above can be combined in various ways in a particular implementation. Furthermore, certain terminology has been used for the purposes of descriptive clarity, and not to limit the present invention.

## Claims

1. A knob controller device comprising:
I) a knob (218) coupled to a grounded surface, said knob rotatable in a rotary degree of freedom about an axis (A) extending through said knob, said knob also moveable in at least a transverse direction (228) approximately perpendicular to said axis;
II) a rotational sensor (276) that detects a position of said knob in said rotary degree of freedom;
III) a transverse sensor (252) operative to detect a position of said knob in said transverse direction; and,
IV) an actuator (270) coupled to said knob and operative to output a force in said rotary degree of freedom about said axis;
**characterised in that**:
the knob controller device further comprises:
V) a spring member (264) coupled between said knob (218) and said actuator (270) to allow said movement in said transverse direction (228) while still being relatively torsionally stiff to allow forces to be transmitted effectively from the actuator (270) to the knob about the axis (A).

2. A knob controller device as recited in claim 1 wherein said knob (218) is moveable in both said transverse direction (228) approximately perpendicular to said axis (A) and a linear degree of freedom (262) approximately parallel to said axis, the knob controller device comprising both said transverse sensor (252) operative to detect a position of said knob in said transverse direction and a linear sensor (258) operative to detect a position of said knob in said linear degree of freedom.

3. A knob controller device as claimed in any preceding claim wherein:
the actuator (270) comprises a first rotatable shaft (268);
the knob (218) is rigidly coupled to a second rotatable shaft (250);
the knob controller device further comprises:
VI) an end member (266) coupled to the first rotatable shaft (268);
VII) a pusher member (256) rigidly coupled to the second rotatable shaft (250);
the spring member (264) being rigidly coupled to:
i) the pusher member (256) at one end; and,
ii) the end member (266) at its other end.

4. A knob controller device as recited in any one of claims 1 to 3, wherein said knob (218) is moveable in a plurality of transverse directions (228), and wherein said transverse sensor (252) is operative to detect when said knob is moved in any of said transverse directions.

5. A knob controller device as recited in claim 4 wherein said transverse sensor (252) includes a hat switch having a plurality of individual switches, each of said individual switches detecting movement of said knob (218) in a particular transverse direction (228).

6. A knob controller device as recited in claim 5 wherein said knob (218) is moveable in four transverse directions (228) spaced approximately orthogonal to each other, and wherein said hat switch includes four individual switches.

7. A knob controller device as recited in any one of claims 1 to 6, further comprising a microprocessor coupled to said rotational sensor (276) and to said transverse sensor (252), said microprocessor receiving sensor signals from said sensors and controlling a function of a device in response to said sensor signals.

8. A knob controller as claimed in any of claims 2 to 7, comprising a further actuator operative to actuate the knob (218) in the linear degree of freedom (262).

9. A knob controller device as recited in any one of claims 1 to 8, further comprising a microprocessor coupled to said rotational sensor (276) and to said transverse sensor (252), said microprocessor receiving sensor signals from said sensors and controlling a function of a device in response to said sensor signals, said microprocessor sending force feedback signals to said actuator (270) to control forces output by said actuator.

10. A knob controller device as recited in any one of claims 1 to 9, further comprising a display (214), wherein an image on said display is changed in response to manipulation of said knob (218) in said transverse direction (228).

11. A knob controller device as recited in any one of claims 2 to 10, further comprising a microprocessor coupled to said rotational sensor (276) and to said linear sensor (258), said microprocessor receiving sensor signals from said sensors and controlling a function of a device in response to said sensor signals, said microprocessor sending force feedback signals to said actuator (270) to control forces output by said actuator.

12. A knob controller device as recited in any of claims 2-11 wherein the spring member (264) is operative to bias said knob to a center position in said linear degree of freedom (262).

13. A knob controller device as recited in any one of claims 2 to 12, wherein said linear sensor (258) detects a position of said knob (218) within a detectable continuous range of motion of said knob, and wherein said linear sensor outputs a sensor signal indicative of said position.

## Patentansprüche

1. Knopfreglervorrichtung, umfassend:
I) einen Knopf (218), der mit einer geerdeten Oberfläche verbunden ist; der Knopf in einem Rotationsfreiheitsgrad um eine Achse (A), die sich durch den Knopf erstreckt, drehbar ist; der Knopf außerdem in zumindest einer Querrichtung (228) ungefähr senkrecht zu dieser Achse bewegbar ist;
II) einen Drehsensor (276), der eine Position des Knopfes in dem Rotationsfreiheitsgrad erkennt;
III) einen Quersensor (252) zur Erkennung einer Position des Knopfes in der Querrichtung; und
IV) ein mit dem Knopf verbundenes Betätigungselement (270) zur Abgabe einer Kraft in dem Rotationsfreiheitsgrad um diese Achse;
**dadurch gekennzeichnet, dass**:
die Knopfreglervorrichtung des Weiteren umfasst:
V) ein zwischen dem Knopf (218) und dem Betätigungselement (270) verbundenes Federelement (264), um die Bewegung in der Querrichtung (228) zuzulassen, während es noch relativ torsionssteif ist, um Kräfte von dem Betätigungselement (270) zu dem Knopf um die Achse (A) wirksam übertragen zu können.

2. Knopfreglervorrichtung nach Anspruch 1, bei der der Knopf (218) sowohl in der Querrichtung (228) etwa senkrecht zu der Achse (A) als auch in einem translatorischen Freiheitsgrad (262) etwa parallel zu der Achse bewegbar ist, die Knopfreglervorrichtung sowohl den Quersensor (252) zur Erkennung einer Position des Knopfes in der Querrichtung als auch einen translatorischen Sensor (258) zur Erkennung einer Position des Knopfes im translatorischen Freiheitsgrad aufweist.

3. Knopfreglervorrichtung nach einem vorhergehenden Anspruch, bei der:
das Betätigungselement (270) eine erste drehbare Welle (268) umfasst;
der Knopf (218) mit einer zweiten drehbaren Welle (250) biegesteif verbunden ist;
die Knopfreglervorrichtung des Weiteren aufweist:
VI) ein Anschlusselement (266), das mit der ersten drehbaren Welle (268) verbunden ist;
VII) ein Schieberelement (256), das mit der zweiten drehbaren Welle (250) biegesteif verbunden ist;
das Federelement (264) biegesteif verbunden ist mit:
i) dem Schieberelement (256) an dem einen Ende; und
ii) dem Anschlusselement (266) an seinem anderen Ende.

4. Knopfreglervorrichtung nach einem der Ansprüche 1 bis 3, bei der der Knopf (218) in einer Vielzahl von Querrichtungen (228) bewegbar ist, und bei der der Quersensor (252) wirksam ist, um zu erkennen, wenn der Knopf in einer beliebigen der Querrichtungen bewegt wird.

5. Knopfreglervorrichtung nach Anspruch 4, bei der der Quersensor (252) einen Hutschalter umfasst, der eine Vielzahl von einzelnen Schaltern aufweist, wobei jeder der einzelnen Schalter eine Bewegung des Knopfes (218) in einer einzelnen Querrichtung (228) erkennt.

6. Knopfreglervorrichtung nach Anspruch 5, bei der der Knopf (218) in vier Querrichtungen (228) bewegbar ist, die im Abstand ungefähr rechtwinklig zueinander angeordnet sind, und bei der der Hutschalter vier einzelne Schalter enthält.

7. Knopfreglervorrichtung nach einem der Ansprüche 1 bis 6, des Weiteren einen Mikroprozessor umfassend, der mit dem Drehsensor (276) und mit dem Quersensor (252) verbunden ist, wobei der Mikroprozessor von den Sensoren Sensorsignale empfängt und eine Funktion eines Gerätes als Reaktion auf die Sensorsignale steuert.

8. Knopfreglervorrichtung nach einem der Ansprüche 2 bis 7, mit einem weiteren Betätigungselement zur Betätigung des Knopfes (218) in dem translatorischen Freiheitsgrad (262).

9. Knopfreglervorrichtung nach einem der Ansprüche 1 bis 8, ferner einen Mikroprozessor umfassend, der mit dem Drehsensor (276) und mit dem Quersensor (252) verbunden ist, der Mikroprozessor Sensorsignale von den Sensoren empfängt und eine Funktion eines Gerätes als Reaktion auf die Sensorsignale steuert, wobei der Mikroprozessor Kraftrückmeldungssignale an das Betätigungselement (270) sendet, um durch das Betätigungselement abgegebene Kräfte zu steuern.

10. Knopfreglervorrichtung nach einem der Ansprüche 1 bis 9, des Weiteren umfassend eine Anzeige (214), bei der ein Bild auf der Anzeige als Reaktion auf eine Bedienung des Knopfes (218) in der Querrichtung (228) verändert wird.

11. Knopfreglervorrichtung nach einem der Ansprüche 2 bis 10, des Weiteren einen Mikroprozessor umfassend, der mit dem Drehsensor (276) und mit dem translatorischen Sensor (258) verbunden ist, der Mikroprozessor Sensorsignale von den Sensoren empfängt und eine Funktion eines Gerätes als Reaktion auf die Sensorsignale steuert, der Mikroprozessor Kraftrückmeldungssignale an das Betätigungselement (270) sendet, um durch das Betätigungselement abgegebene Kräfte zu steuern.

12. Knopfreglervorrichtung nach einem der Ansprüche 2 bis 11, bei der das Federelement (264) wirksam ist, um den Knopf auf eine Mittelstellung in dem translatorischen Freiheitsgrad (262) vorzuspannen.

13. Knopfreglervorrichtung nach einem der Ansprüche 2 bis 12, bei der der translatorische Sensor (258) eine Stellung des Kopfes (218) innerhalb eines detektierbaren kontinuierlichen Bewegungsbereiches des Knopfes erkennt, und bei der der translatorische Sensor ein die Stellung anzeigendes Sensorsignal ausgibt.

## Revendications

1. Dispositif de commande de bouton comprenant :
I) un bouton (218) couplée à une surface mise à la masse, ledit bouton pouvant être mise en rotation dans un degré de liberté rotatif autour d'un axe (A) s'étendant à travers ledit bouton, ledit bouton pouvant également se déplacer dans au moins une direction transversale (228) approximativement perpendiculaire audit axe ;
II) un capteur rotationnel (276) qui détecte une position dudit bouton dans ledit degré de liberté rotatif ;
III) un capteur transversal (252) ayant pour fonction de détecter une position dudit bouton dans ladite direction transversale ; et
IV) un actionneur (270) relié audit bouton et ayant pour fonction d'exercer une force dans ledit degré de liberté rotatif autour dudit axe ;
**caractérisé en ce que** :
le dispositif de commande de bouton comprenant en outre :
V) un organe ressort (264) relié entre ledit bouton (218) et ledit actionneur (270) pour permettre ledit mouvement dans ladite direction transversale (228) tout en étant encore relativement rigide en torsion pour permettre la transmission de force efficacement de l'actionneur (270) du bouton autour de l'axe (A).

2. Dispositif de commande de bouton selon la revendication 1, dans lequel ledit bouton (218) peut être déplacé à la fois dans ladite direction transversale (228) approximativement perpendiculaire audit axe (A) et un degré de liberté linéaire (262) approximativement parallèle audit axe, le dispositif de commande de bouton comprenant à la fois ledit capteur transversal (252) ayant pour fonction de détecter une position dudit bouton dans ladite direction transversale et un capteur linéaire (258) ayant pour fonction de détecter une position dudit bouton dans ledit degré de liberté linéaire.

3. Dispositif de commande de bouton selon l'une quelconque des revendications précédentes, dans lequel :
l'actionneur (270) comprend un premier arbre pouvant être mis en rotation (268) ;
le bouton (218) est reliée rigidement à un second arbre pouvant être mis en rotation (250) ;
le dispositif de commande de bouton comprend en outre :
VI) un organe d'extrémité (266) couplé au premier arbre pouvant être mis en rotation (268) ;
VII) un organe poussoir (256) relié rigidement au second arbre pouvant être mis en rotation (250) ;
l'organe ressort (264) étant relié rigidement à :
i) l'organe poussoir (256) à une extrémité ; et
ii) l'organe d'extrémité (266) à son autre extrémité.

4. Dispositif de commande de bouton selon l'une quelconque des revendications 1 à 3, dans lequel ledit bouton (218) peut être déplacé dans une pluralité de directions transversales (228), et dans lequel ledit capteur transversal (252) a pour fonction de détecter quand ledit bouton est déplacé dans l'une quelconque desdites directions transversales.

5. Dispositif de commande de bouton selon la revendication 4, dans lequel ledit capteur transversal (252) inclut un bouton champignon comportant une pluralité de commutateurs individuels, chacun desdits commutateurs individuels détectant le mouvement dudit bouton (218) dans une direction transversale (228) particulière.

6. Dispositif de commande de bouton selon la revendication 5, dans lequel ledit bouton (218) peut être déplacé dans quatre directions transversales (228) espacées approximativement orthogonalement les unes des autres, et dans lequel ledit bouton champignon inclut quatre commutateurs individuels.

7. Dispositif de commande de bouton selon l'une quelconque des revendications 1 à 6, comprenant en outre un microprocesseur couplé audit capteur rotationnel (276) et audit capteur transversal (252), ledit microprocesseur recevant des signaux de capteur desdits capteurs et commandant une fonction d'un dispositif en réponse auxdits signaux de capteur.

8. Dispositif de commande de bouton selon l'une quelconque des revendications 2 à 7, comprenant en outre un actionneur supplémentaire ayant pour fonction d'actionner le bouton (218) dans le degré de liberté linéaire (262).

9. Dispositif de commande de bouton selon l'une quelconque des revendications 1 à 8, comprenant en outre un microprocesseur couplé audit capteur rotationnel (276) et audit capteur transversal (252), ledit microprocesseur recevant des signaux de capteur desdits capteurs et commandant une fonction d'un dispositif en réponse auxdits signaux de capteur, ledit microprocesseur envoyant des signaux de retour de force audit actionneur (270) pour commander des forces exercées par ledit actionneur.

10. Dispositif de commande de bouton selon l'une quelconque des revendications 1 à 9, comprenant en outre un afficheur (214), dans lequel une image sur ledit afficheur est changée en réponse à une manipulation dudit bouton (218) dans ladite direction transversale (228).

11. Dispositif de commande de bouton selon l'une quelconque des revendications 2 à 10, comprenant en outre un microprocesseur couplé audit capteur rotationnel (276) et audit capteur linéaire (258), ledit microprocesseur recevant des signaux de capteur desdits capteurs et commandant une fonction d'un dispositif en réponse auxdits signaux de capteur, ledit microprocesseur envoyant des signaux de retour de force audit actionneur (270) pour commander des forces exercées par ledit actionneur.

12. Dispositif de commande de bouton selon l'une quelconque des revendications 2 à 11, dans lequel l'organe ressort (264) a pour fonction de solliciter ledit bouton vers une position centrale dans ledit degré de liberté linéaire (262).

13. Dispositif de commande de bouton selon l'une quelconque des revendications 2 à 12, dans lequel ledit capteur linéaire (258) détecte une position dudit bouton (218) dans une plage de mouvements continus détectables dudit bouton, et dans lequel ledit capteur linéaire produit en sortie un signal de capteur indicatif de ladite position.
